# EUROPEAN PATENT APPLICATION

(11) **EP 4 797 615 A1**
(43) Date of publication of application: **26.08.2026**
(21) Application number: 25158921.4
(22) Date of filing: 19.02.2025
(51) Int. Cl.: H04L 9/40

(54) **METHOD FOR INVESTIGATING A MALWARE EMBEDDED IN AN EDGE DEVICE OF TELECOMMUNICATIONS NETWORK AT RUNTIME**

(71) Applicant: Huawei Technologies Co., Ltd., Shenzhen, Guangdong 518129 (CN)
(72) Inventor: Birman, Yoni, 80992 Munich (DE); Arazi, Ron, 80992 Munich (DE)
(74) Representative: Goddar, Heinz J.

(57) **Abstract**

A method of investigating at runtime a malware embedded in an edge device (204, 304A-C) of a telecommunications network is provided. The method includes detecting cryptomining activity taking place at an edge device during runtime of the edge device. The edge device has been previously infected with the malware. Upon detecting the cryptomining activity, a pool server (208, 308) which assigns tasks to the edge device is replaced with a replacement device (206, 306). The method includes sending and receiving data communications to/from the edge device via the replacement device instead of via the pool server, including sending replacement tasks to the edge device.

## Description

### TECHNICAL FIELD

The disclosure relates generally to monitoring malware attacks at runtime, and more particularly, the disclosure relates to a method of investigating at runtime a malware embedded in an edge device of a telecommunications network. Moreover, the disclosure relates to a system of investigating at runtime a malware embedded in the edge device of the telecommunications network.

### BACKGROUND

One of the biggest challenges faced by security teams today is the ability to monitor cryptojacking attacks at runtime. Cryptojacking is a class of malware that embeds itself within an edge device and uses its resources to mine cryptocurrency. Since malware/cryptojackers require significant system resources, the primary focus of security teams is often on stopping them quickly to free up resources, rather than thoroughly inspecting them. As a result, the malware/cryptojackers are not analyzed during runtime, which is when they exhibit their most natural behavior.

To analyze these malware/cryptojackers, the security teams typically run them in a sandbox environment. However, this approach has drawbacks. Running malware in the sandbox environment requires substantial resources and carries a high risk that the malware may behave differently than it would in a real environment. This is because many malware/cryptojackers are designed with advanced evasion techniques to detect and adapt to sandbox executions.

Cryptojacking is a type of malware that embeds itself within the edge devices and uses its resources to mine cryptocurrency without the owner's consent. Cryptojacking poses challenges for businesses, as organizations with multiple cryptojacked systems can incur substantial costs, including: (i) in cloud environments with unlimited computing resources, hackers/attackers can generate very high cloud expenses, (ii) increased electricity and cooling costs due to the resource usage caused by cryptojacking, (iii) organizational services may experience performance degradation due to increased usage of computing resources by the cryptojacker's mining activities, and (iv) additional time and resources from help desk and IT teams are required to diagnose and resolve performance issues caused by cryptojacking.

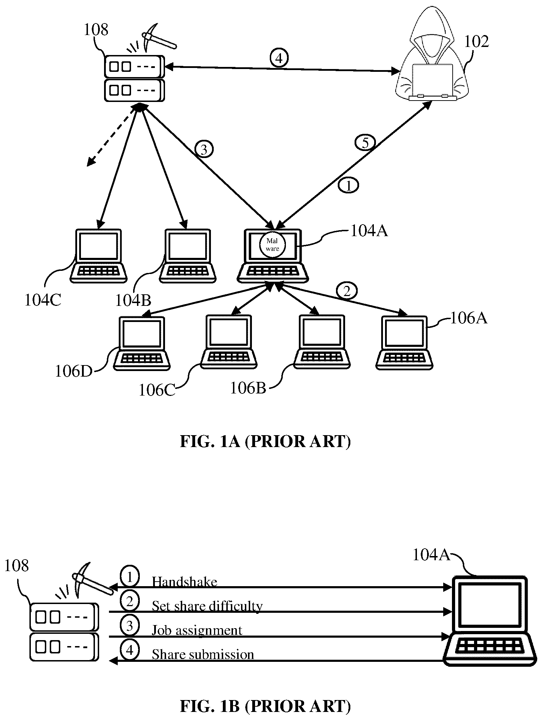

FIG. 1A illustrates a typical high-level architecture of cryptojacking malware attacks according to a prior art implementation. At a step **1,** an adversary (i.e., a hacker or attacker) **102** creates cryptojacking malware/cryptojacker with the intent to exploit one or more edge devices **104A-C** and deploys the cryptojacking malware onto the one or more edge devices **104A-C.** Once the cryptojacking malware is installed on the one or more edge devices **104A-C,** the cryptojacking malware infiltrates the one or more edge devices **104A-C,** and as a result, the one or more edge devices **104A-C** are infected with the cryptojacking malware. At a step **2,** the infected edge devices **104A-C** escalate their privileges, and maintain persistence, and propagate through a network to infect other edge devices **106A-D** connected to the one or more edge devices **104A-C.** At a step 3, the one or more infected edge devices (e.g. **104A-C, 106A-D)** is connected to a pool server **108** using a communication protocol (e.g., a stratum protocol), and the cryptocurrency mining process is initiated. The pool server **108** assigns tasks to and uses the resources of the one or more infected edge devices (e.g. **104A-C, 106A-D).** At a step **4,** the pool server **108** updates the adversary **102** with the revenue status (i.e., cryptocurrency) generated from the one or more infected edge devices (e.g. **104A-C, 106A-D).** At a step **5,** the adversary **102** checks the status of the infected edge devices (e.g. **104A-C, 106A-D)** and the cryptojacking malware to ensure the operation continues. The adversary **102** exploits stolen resources, while the victim faces performance degradation, higher energy costs, and potential hardware damage.

FIG. 1B illustrates a communication between the infected edge device **104A** with the pool server **108** of FIG. 1A using a communication protocol (e.g. a stratum protocol) according to a prior art implementation. The edge device **104A** is infected by a cryptojacking malware to perform unauthorized cryptocurrency mining. The pool server **108** coordinates mining activities, assigns computational tasks to the edge device **104A,** and combines their computational resources. The stratum protocol manages interactions with all infected edge devices (e.g. **104A-C, 106A-D**) in a telecommunications network. FIG. 1B emphasizes the flow of data and tasks between the infected edge device **104A** and pool server **108,** and highlights how the stratum protocol facilitates unauthorized mining operations. The edge device **104A** is connected to the pool server **108** using a stratum protocol (i.e. handshake process depicted as 1 in the figure). The stratum protocol is a JSON-based communication standard used in mining to enable communication between the infected edge device **104A** and the pool server **108.** The pool server **108** sets computational task difficulty for assigning them to the infected edge device **104A** (i.e. set share difficulty depicted as 2 in the figure). The stratum protocol allows the pool server **108** to assign the computational task to the infected edge device **104A,** such as solving parts of the cryptographic puzzles required for mining a cryptocurrency block (i.e. job assignment depicted as 3 in the figure). If the edge device **104A** meets the computational task difficulty, it submits its computational task difficulty to the pool server **108** (i.e. share submission depicted as 4 in the figure).

Proof of Work, PoW, is a mathematical mechanism used by cryptocurrencies, including Bitcoin, to achieve the consensus that approves the transaction in a blockchain to ensure the security and integrity of the blockchain. In PoW, the infected edge devices (**104A-C, 106A-D)** compete to solve a complex cryptographic puzzle that requires substantial computational effort and energy. The first edge device (e.g., miner A, **104A**), to successfully solve a cryptographic puzzle, earns the right to add a new block of transactions to the blockchain and is rewarded with cryptocurrency.

A simplified example of a cryptographic puzzle is provided as follows: Block data includes essential information such as the previous block's hash and a list of transactions. The previous block hash is "0000abcd1234". The list of transactions includes ["tx1", "tx2", "tx3"]. A target hash is the goal that is to produce a hash that starts with four leading zeros ("0000").

The PoW process of the above cryptographic puzzle is explained as follows. The infected edge devices (e.g. **104A-C)** change a value called a nonce (i.e., a number used once) to generate different hash outputs until a target condition/hash is met. In attempt 1: the nonce is 0, an input string is "0000abcd1234tx1tx2tx30", and a hash output is "1f3b29a7". The hash output does not meet the target hash as it does not start with "0000". In attempt 2: the nonce is 1, and the input string is "0000abcd1234tx1tx2tx31". However, the hash output does not meet the target hash which has to start with "0000". In attempt 3: similar unsuccessful attempts. In attempt 4: the nonce is 3, the input string is "0000abcd1234tx1tx2tx33", and the hash output is "000034ac", which meets the target hash of starting with "0000". Once the infected edge device (e.g. **104A)** finds a valid target hash, a block is added to the blockchain, and the infected edge device (e.g. **104A)** receives a reward.

In the Bitcoin cryptocurrency network, the difficulty of PoW has increased over time. For example, the difficulty requires an infected edge device (e.g. **104A)** to generate a hash with approximately 18-19 leading zeros. This makes the computational effort far more demanding than in this simplified example.

Crypto/mining pools enable an infected edge device (e.g. **104A)** to combine their computational power to increase the likelihood of solving a block and earning rewards. The computational work and corresponding rewards are distributed among pool members (i.e., the one or more edge device **104A-C**) based on each member's contribution. While the crypto pools enhance efficiency and provide a more stable income for individual miners by pooling their resources, this collaborative approach ensures consistent earnings and increases the chances of solving blocks.

Below is an overview of how crypto pools operate and manage the distribution of work among the one or more edge devices **104A-C:** The pool server **108** prepares a "job" by creating a block template. The block template includes a hash of the previous block, a list of transactions, a timestamp, and a nonce. The pool server **108** divides the job into smaller tasks, referred to as "shares," by varying the nonce and other components of the block template to distribute the workload.

The one or more edge devices **104A-C** (e.g. a miner) connected to the pool server **108** is assigned a unique range of nonces or work parameters to avoid duplication of effort. The one or more edge devices **104A-C** work independently within their assigned ranges to find a valid hash that satisfies the share difficulty target set by the pool server **108.** For example, the first edge device (e.g. a miner A, **104A)** is assigned the nonces from 0 to 1,000. The second edge device (e.g. a miner B, **104B**) is assigned the nonces from 1,001 to 2,000. Each edge device **104A-B** processes its respective nonce range to determine a valid hash within its assigned nonce range that meets the share difficulty target set by the pool server **108.** If the first edge device **104A** or miner A discovers a valid share with the nonce 500 that meets the pool's share difficulty, the first edge device **104A** submits it to the pool server **108** for verification. When the share of the first edge device **104A** meets a network difficulty level, the pool server **108** successfully mines a new block. The pool server **108** then verifies all submitted shares and calculates each edge device's contribution. Rewards are distributed among the pool members (i.e., the edge devices **104A-B**) based on a number of shares submitted by each edge device **104A-B** according to a reward distribution method of the pool server **108.** The reward distribution method varies depending on the reward system of the pool server **108,** such as proportional or Pay-Per-Share (PPS). For example, the first edge device **104A** or miner A and the second edge device **104B** or miner B receive their share of a block reward according to their contribution to solving a block.

Detection and prevention mechanisms are essential to address malicious cryptojacking campaigns. The approach varies depending on the environment, with distinct strategies for laptops, personal computers, developer environments, servers, cloud workloads, and operational technology, OT, systems. When a malware or suspicious behavior is detected in laptops, personal computers, or developer environments, it is mitigated by implementing measures to neutralize the malware. These measures include terminating malicious processes, deleting malicious files from the endpoint, and blocking malicious network connections. If the malware runtime is short, the damage to the network is very low. Furthermore, in most cases, these swift actions eliminate the need for a Security Operations Center, SOC, investigation. However, attackers are often aware that their activities have been detected. In response, they may hide their operations, deploy backdoors, or exit the network altogether, which can complicate the work of the Incident Response, IR, team and make it more challenging to fully eliminate the threat.

When malware or suspicious behavior is detected in servers, cloud workloads, and operational technology, OT, environments, an alert is sent to the Security Operations Center, SOC. However, the malicious process is not interrupted and continues to run normally. When the malware is detected in the servers, cloud workloads, or OT environments, the damage to the network is very high. Its presence indicates that a large-scale malicious campaign is underway, and requires an immediate response from an Incident Response, IR, team. The IR team analyzes alerts to identify attack vectors, assess the extent of network damage, and formulate a response plan. However, this process is both time-intensive and resource-demanding. Further, attackers remain unaware that they have been detected and enables them to continue their activities normally and remain within the network. This lack of awareness enables the IR team to monitor their actions and gather valuable intelligence without alerting the attackers.

Servers and cloud workloads are typically targeted in crypto-mining campaigns due to their high-performance hardware, such as CPUs and GPUs. Policies are commonly employed to detect crypto-mining attacks and allow the IR team to respond properly.

While the IR team analyzes the incident and prepares a response plan, the organization incurs a lot of expenses for resources that are used to mine cryptocurrency, especially in a cloud environment with "unlimited" resource allocation options.

An existing method for monitoring cryptojacker malware involves creating an environment where the malware can operate safely without restrictions. This is typically achieved by running the cryptojacker malware in a sandbox environment or disabling all security services on an edge device to allow unrestricted operation. However, running cryptojacker malware in the sandbox environment includes operational challenges. For example, the sandbox environment is trivial, and executing malware is often impossible due to dependencies required by the malware and its self-defense techniques designed to evade sandbox detection.

Another limitation is the dependency on source code. The sandbox environment typically requires access to the malware's source code for deployment and execution, which is not always available or feasible. Furthermore, the sandbox environment lacks real-time monitoring capabilities. Finally, once the cryptojacker malware is executed in the sandbox environment, it consumes more computational resources, similar to the high resource demands as seen in actual cryptojacker malware attacks. Further, the cryptojacker malware continues to use high CPU usage, which reflects the challenges of monitoring and mitigating such threats.

Therefore, there arises a need to address the aforementioned technical problems/drawbacks in detecting/monitoring cryptojacking attacks.

### SUMMARY

It is an object of the disclosure to provide a method of investigating at runtime a malware embedded in an edge device of a telecommunications network. Moreover, the disclosure relates to a system of investigating at runtime a malware embedded in the edge device of the telecommunications network. Further, the disclosure relates to a computer program that includes instructions for carrying out the method, when the computer program is executed on a computer system.

This object is achieved by the features of the independent claims. Further, implementation forms are apparent from the dependent claims, the description, and the figures.

According to a first aspect, there is provided a method of investigating at runtime a malware embedded in an edge device of a telecommunications network. The method includes detecting cryptomining activity taking place at an edge device during runtime of the edge device. The edge device has been previously infected with malware. The method includes, upon detecting the cryptomining activity, replacing a pool server which assigns tasks to the edge device, with a replacement device. The method includes sending and receiving data communications to/from the edge device via the replacement device instead of via the pool server, including sending replacement tasks to the edge device.

Preferably, the replacement tasks sent to the edge device are tasks which use a resource level below a predetermined threshold resource level. The method optimizes resource usage by controlling which "jobs/tasks" are sent to the edge device. The edge device processes easy-to-calculate tasks to minimize its resource consumption and to reduce the impact on its performance and electricity usage.

Optionally, the replacement device sends the pool server acknowledgements. Preferably, the edge device uses resources of the replacement device to carry out the replacement tasks. The method can be deployed on any device positioned between the pool server and the edge device. This flexibility supports a variety of deployment scenarios and makes it compatible with any networking or security device that acts as an intermediary between the endpoint/edge device and the pool server. Optionally, the malware is mining for cryptocurrency.

The replacement device may be a firewall, an intrusion prevention/detection system, a web application firewall or an end point detect and response system. The method integrates with various replacement devices (e.g., security products), including Endpoint Protection Platforms, EPP, Endpoint Detection and Response, EDR, Extended Detection and Response, XDR, Antivirus, AV, Managed Detection and Response, MDR, Firewalls, FW, Intrusion Prevention Systems, IPS, and Intrusion Detection Systems, IDS. The method monitors/investigates both single-threaded and multi-threaded cryptojacking attacks and enhances the functionality of existing security solutions by incorporating this method.

Preferably, the replacement tasks involve dropping a subset of a plurality of job requests sent to the edge device or decreasing a difficulty level of a task by removing leading zeros.

According to a second aspect, there is provided a system comprising means adapted for carrying out all the steps of the above described method.

According to a third aspect, there is provided a computer program including instructions for carrying out all the steps of the above described method, when the computer program is executed on a computer system.

The method, system and computer program monitor and investigate the malware (e.g., cryptojackers) at runtime with minimal computational resource usage and electricity consumption. The method enables effective analysis of the malware in its operating environment, thereby reducing both resource usage and associated risks. The method allows deployment in any security or networking device and optimizes computational resource efficiency for investigating the malware. The method investigates/monitors the malware on the edge device without its awareness. This ensures that hackers or adversaries remain oblivious to the fact that their malware is being observed, leading them to believe their attack is functioning as intended. By providing full visibility into all malware mining-related actions, the method enhances the ability to investigate and analyze the malware effectively.

The method provides real-time monitoring/investigation of malware/cryptojacking incidents and also provides an improved detection policy for malware/cryptojacking attacks that minimizes operational costs for an organization while ensuring a security team can respond effectively. By enabling real-time analysis of the malware, (e.g., cryptojackers) a capability that is absent in existing solutions, the method provides the security team with tools to analyze/investigate the malware/cryptojackers at runtime more promptly and effectively. The method allows the malware/cryptojacking attacks to be handled without incurring high hardware costs, and enables the security team to perform real-time incident analysis at runtime with minimal risk.

Therefore, in contradistinction to the existing solutions, the system monitors and investigates the malware (e.g., cryptojackers) at runtime with minimal computational resource usage and electricity consumption. The system enables effective analysis of the malware in its operating environment, thereby reducing both resource usage and associated risks. The system allows deployment in any security or networking device and optimizes computational resource efficiency for investigating the malware.

These and other aspects of the disclosure will be apparent from the implementation(s) described below.

### BRIEF DESCRIPTION OF DRAWINGS

Implementations of the disclosure will now be described, by way of example only, with reference to the accompanying drawings, in which:
FIG. 1A (PRIOR ART) illustrates a typical high-level architecture of cryptojacking malware attacks according to a prior art implementation;
FIG. 1B (PRIOR ART) illustrates a communication between an infected edge device with a pool server of FIG. 1A using a communication protocol according to a prior art implementation;
FIG. 2 is a block diagram that illustrates a system of investigating a malware embedded in an edge device of a telecommunications network at runtime in accordance with an implementation of the disclosure;
FIG. 3 illustrates a high-level architecture of a system of investigating a malware embedded in one or more edge devices of a telecommunications network at runtime in accordance with an implementation of the disclosure;
FIG. 4 illustrates a real cryptomining session that is manipulated by a system in accordance with an implementation of the disclosure;
FIG. 5 is a flow diagram that illustrates a method of investigating a malware embedded in an edge device of a telecommunications network at runtime in accordance with an implementation of the disclosure; and
FIG. 6 is an illustration of a computer system in which the various architectures and functionalities of the various previous implementations may be implemented.

### DETAILED DESCRIPTION OF THE DRAWINGS

Implementations of the disclosure provide a method of investigating at runtime a malware embedded in an edge device of a telecommunications network. Moreover, the disclosure relates to a system of investigating at runtime a malware embedded in the edge device of the telecommunications network. Further, the disclosure relates to a computer program that includes instructions for carrying out the method, when the computer program is executed on a computer system.

To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

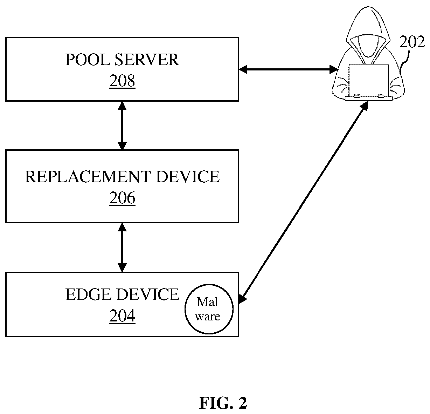

FIG. 2 is a block diagram that illustrates a system of investigating a malware embedded in an edge device 204 of a telecommunications network at runtime in accordance with an implementation of the disclosure. The system includes an edge device **204,** a pool server **208,** and a replacement device **206.** The edge device **204** is connected to the pool server **208** of the telecommunications network. An adversary (e.g., a hacker or attacker) **202** creates a malware (e.g., cryptojacker) with the intent to exploit the edge device **204** for unauthorized cryptocurrency/cryptomining activity and deploys the malware on the edge device **204.** The edge device **204** is infected with the malware. Optionally, the malware is mining for cryptocurrency and the cryptocurrency is Bitcoin. The system detects cryptomining activity that is taking place at the edge device **204** during runtime of the edge device **204.** The cryptomining activity may be performed using a tool called xmrig. The pool server **208** assigns one or more tasks to the edge device **204.** The system replaces the pool server **208** with the replacement device **206,** upon detecting the cryptomining activity on the edge device **204.** For example, if the adversary **202** examines the pool server **208,** the adversary **202** may still observe the infected edge device **204** as being connected while maintaining the illusion of normal operations. The replacement of the pool server **208** with the replacement device **206** ensures that the adversary **202** perceives, interacts with, and operates the malware on the edge device **204** as if it is connected to the pool server **208.** In an embodiment, the cryptomining activity on the edge device **204** is detected using a detection mechanism/method including signatures, static rules, code inspection, dynamic rules, advanced machine learning, threat intelligence, or any other detection tool or service.

The system sends and receives data communications to/from the edge device **204** via the replacement device **206** instead of via the pool server **208.** The system sends replacement tasks to the edge device **204.** Preferably, the replacement tasks sent to the edge device **204** are tasks which use a resource level below a predetermined threshold resource level. The system optimizes the resource usage by controlling which "jobs/tasks" are sent to the edge device **204.** The system processes easy-to-calculate tasks to minimize its resource consumption and to reduce the impact on the performance and electricity usage of the edge device **204.**

Optionally, the replacement device **206** sends the pool server acknowledgements. Preferably, the edge device **204** uses the resources of the replacement device **206** to carry out the replacement tasks. The system can be deployed on any device positioned between the pool server **208** and the edge device **204.** This flexibility supports a variety of deployment scenarios and makes it compatible with any networking or security service that acts as an intermediary between the endpoint/edge device **204** and the pool server **208.**

The replacement device **206** may be a firewall, an intrusion prevention/detection system, a web application firewall or an end point detect and response system. The system seamlessly integrates with various replacement devices (e.g., security products), including Endpoint Protection Platforms, EPP, Endpoint Detection and Response, EDR, Extended Detection and Response, XDR, Antivirus, AV, Managed Detection and Response, MDR, Firewalls, FW, Intrusion Prevention Systems, IPS, and Intrusion Detection Systems, IDS. The system monitors/investigates both single-threaded and multi-threaded cryptojacking attacks and enhances the functionality of existing security solutions by incorporating this method.

Preferably, the replacement tasks involve dropping a subset of a plurality of job requests sent to the edge device **204** and decreasing a difficulty level of a task by removing leading zeros. The system simulates replacement tasks, allowing the edge device **204** to operate without interruption while reducing resource usage and costs during malware investigation. The replacement tasks may be easily implemented on the replacement device **206.**

In an embodiment, Man-in-the-Middle, MITM, techniques may be applied between the edge device **204** and the pool server **208.** In another embodiment, when the edge device **204** receives a computational job/task from the pool server **208,** the edge device **204** consumes more resources to find the computational task and sends the results of the task back to the pool server **208.** The pool server **208** then validates the results. By intentionally delaying the result messages from the edge device **204,** the pool server **208** interprets this as poor hardware performance on the edge device's **204** end. Consequently, the pool server **208** starts assigning easier computational tasks (i.e., the replacement tasks) to the edge device **204** over time. This reduces the edge device's **204** computational resource consumption while still maintaining its connection to the pool server **208.**

In yet another embodiment, the pool server **208** assigns computational tasks to the edge device **204** with a specific difficulty level. By artificially increasing the task difficulty (e.g. by adding leading zeros), the edge device **204** fails to solve the tasks effectively. When the pool server **208** notices that the edge device **204** takes an extended time to complete these tasks, the pool server **208** assumes the hardware is underperforming and subsequently assigns easier tasks (i.e., the replacement tasks). This reduces the computational resource usage of the edge device **204** while keeping the connection with the pool server **208** active.

In yet another embodiment, the pool server **208** decreases the task difficulty (e.g. by removing leading zeros) in the tasks and assigns the tasks (i.e. the replacement tasks) to the edge device **204.** This allows the edge device **204** to solve the replacement tasks more easily, which leads to reduced CPU usage and resource consumption.

In yet another embodiment, by intercepting and dropping some of the task requests sent by the pool server **208** to the edge device **204,** the edge device **204** ends up processing only a subset of the requests. This reduces workload leading to decreased CPU usage while maintaining the edge device's **204** connection to the pool server **208.** The replacement tasks reduce resource consumption and unauthorized mining costs while maintaining the edge device **204** to function normally, which enables incident response, IR, teams to address the issue without alerting the adversary **202**/attackers.

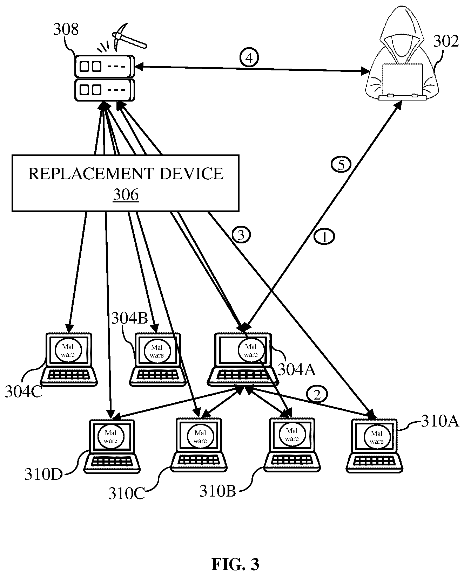

FIG. 3 illustrates a high-level architecture of a system of investigating a malware embedded in one or more edge devices **304A-C** of a telecommunications network at runtime in accordance with an implementation of the disclosure. The system includes one or more edge devices **304A-C,** a pool server **308,** and a replacement device **306.** The one or more edge devices **304A-C** are connected to the pool server **308** of the telecommunications network. At a step **1,** an adversary (e.g., a hacker or attacker) **302** creates a malware (e.g., cryptojacker) with the intent to exploit the one or more edge devices **304A-C** for unauthorized cryptocurrency/cryptomining activity and deploys the malware on the one or more edge devices **304A-C.** The cryptocurrency may be Bitcoin. The one or more edge devices **304A-C** may include laptops, desktops, or IoT devices. Once the malware is installed on the one or more edge devices **304A-C,** the malware infiltrates the one or more edge devices **304A-C,** and the edge devices **304A-C** are infected with the malware. At a step **2,** the one or more edge devices **304A-C** escalates its privileges, establishes persistence, and propagates through the telecommunications network to infect additional edge devices **310A-D** connected to the one or more edge devices **304A-C.** The pool server **308** of the communications network assigns cryptocurrency mining tasks to the one or more edge devices **304A-C** that are infected. At a step **3,** the system detects cryptomining activity that is taking place at the edge devices **304A-C** that are infected during their runtime. The pool server **308** of the telecommunications network assigns one or more tasks to the one or more edge devices **304A-C.** The system replaces the pool server **308** with the replacement device **306,** upon detecting the cryptomining activity on the one or more edge devices **304A-C.** The replacement of the pool server **308** with the replacement device **306** ensures that the adversary **302** perceives, interacts with, and operates the malware on the one or more edge devices **304A-C** as if it is connected to the pool server **308.** The system sends replacement tasks to the one or more edge devices **304A-C** via the replacement device **306** instead of via the pool server **308.** The system sends and receives data communications to/from the one or more edge devices **304A-C** via the replacement device **306.** Preferably, the replacement tasks sent to the one or more edge devices **304A-C** are tasks which use a resource level below a predetermined threshold resource level. Optionally, the replacement device **306** sends the pool server **308** acknowledgements. Preferably, the one or more edge devices **304A-C** uses the resources of the replacement device **306** to carry out the replacement tasks. The replacement device **306** may be a firewall, an intrusion prevention/detection system, a web application firewall or an end point detect and response system. By simulating the replacement tasks, the system allows the one or more edge devices **304A-C** to continue operating without interruption while reducing resource usage and costs during malware investigation.

At a step 4, the pool server **308** updates the adversary **302** with the revenue (i.e. the cryptocurrency) generated from the one or more edge devices **304A-C** that are infected. At a step **5,** the adversary **302** checks the status of the edge devices **304A-C** that are infected and the cryptojacking malware to ensure the operation continues. The replacement tasks reduce resource consumption and unauthorized mining costs while maintaining the edge device **304A-C** to function normally, which enables incident response, IR, teams to address the issue without alerting the adversary **302**/attackers.

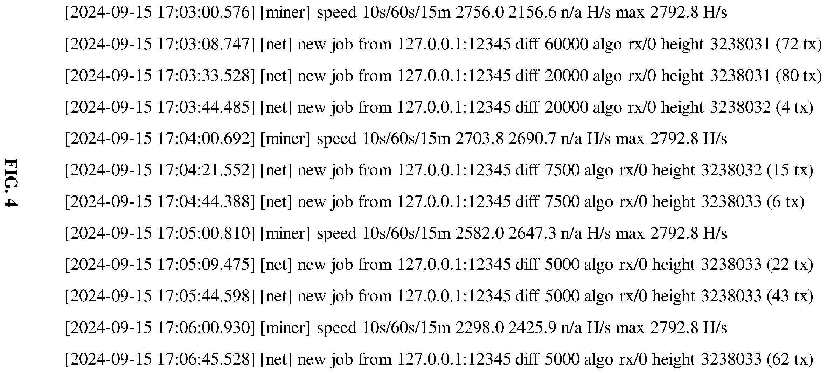

FIG. 4 illustrates a real cryptomining session that is manipulated by a system in accordance with an implementation of the disclosure. A Proof of Concept, POC, is conducted to validate the system, which demonstrates a 92% reduction in computational resource (e.g. CPU) usage during runtime analysis of malware (e.g. cryptojackers). In FIG. 4, the job/task difficulty started at 60,000, reflecting the hardware's capability, and is progressively reduced to 5,000. The system that manipulates job/task requests (i.e. cryptomining activities) from a pool server to an edge device is easily implemented. The cryptomining activity is performed using a tool called xmrig, which is connected to the pool server. The system POC is executed on a replacement device (e.g. a network device functioning as a firewall, proxy, or gateway).

An example implementation demonstrates how a real-world cryptocurrency mining session manipulated by the system using a replacement task that involves dropping a subset of one or more job/task requests sent to the edge device. Initially, the mining jobs/tasks run normally, resulting in high CPU usage. Subsequently, the POC drops the job requests/messages from the pool server to the edge device while maintaining an active connection. This reduces CPU usage significantly after an initial spike.

Another example demonstrates how a real-world cryptocurrency mining session manipulated by the system using a replacement task that involves increasing a difficulty level of a task. In this approach, the pool server sends jobs/tasks to the edge device, and the POC increases the job's difficulty (e.g., by adding leading zeros). The edge device finds it difficult to solve these jobs/tasks, and prompts the pool server to assume that the edge device's hardware is underpowered and send easier jobs/tasks. As a result, this manipulation results in reduced CPU usage.

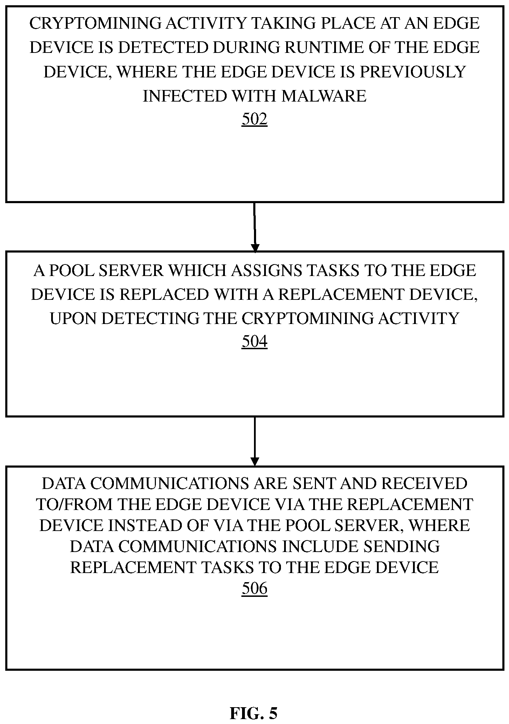

FIG. 5 is a flow diagram that illustrates a method of investigating a malware embedded in an edge device of a telecommunications network at runtime in accordance with an implementation of the disclosure. At a step **502,** cryptomining activity taking place at an edge device is detected during runtime of the edge device. The edge device is previously infected with malware. At a step **504,** a pool server which assigns tasks to the edge device is replaced with a replacement device, upon detecting the cryptomining activity. At a step **506,** data communications are sent and received to/from the edge device via the replacement device instead of via the pool server. The data communications include sending replacement tasks to the edge device.

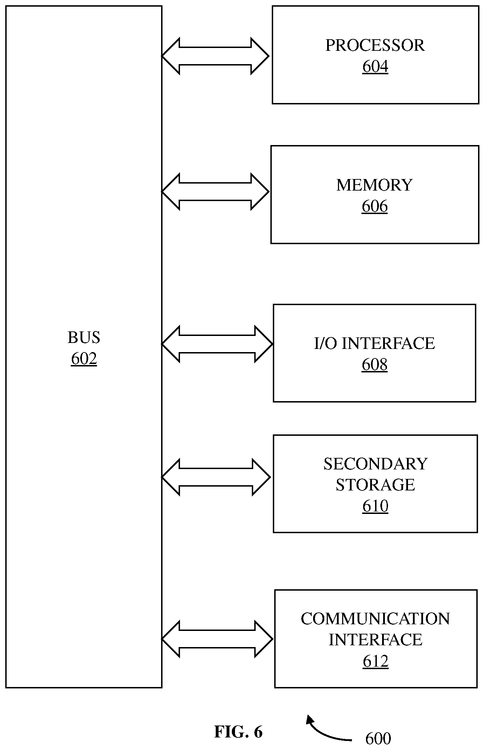

FIG. 6 is an illustration of a computer system in which the various architectures and functionalities of the various previous implementations may be implemented. As shown, the computer system **600** includes at least one processor **604** that is connected to a bus **602,** wherein the computer system **600** may be implemented using any suitable protocol, such as PCI (Peripheral Component Interconnect), PCI-Express, AGP (Accelerated Graphics Port), Hyper Transport, or any other bus or point-to-point communication protocol (s). The computer system **600** also includes a memory **606.**

Control logic (software) and data are stored in the memory **606** which may take a form of random-access memory (RAM). In the disclosure, a single semiconductor platform may refer to a sole unitary semiconductor-based integrated circuit or chip. It should be noted that the term single semiconductor platform may also refer to multi-chip modules with increased connectivity which simulate on-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The computer system **600** may also include a secondary storage **610.** The secondary storage **610** includes, for example, a hard disk drive and a removable storage drive, representing a floppy disk drive, a magnetic tape drive, a compact disk drive, digital versatile disk (DVD) drive, recording device, universal serial bus (USB) flash memory. The removable storage drive at least one of reads from and writes to a removable storage unit in a well-known manner.

Computer programs, or computer control logic algorithms, may be stored in at least one of the memory **606** and the secondary storage **610.** Such computer programs, when executed, enable the computer system **600** to perform various functions as described in the foregoing. The memory **606,** the secondary storage **610,** and any other storage are possible examples of computer-readable media.

In an implementation, the architectures and functionalities depicted in the various previous figures may be implemented in the context of the processor **604,** a graphics processor coupled to a communication interface **612,** an integrated circuit (not shown) that is capable of at least a portion of the capabilities of both the processor **604** and a graphics processor, a chipset (namely, a group of integrated circuits designed to work and sold as a unit for performing related functions, and so forth).

Furthermore, the architectures and functionalities depicted in the various previous-described figures may be implemented in a context of a general computer system, a circuit board system, a game console system dedicated for entertainment purposes, an application-specific system. For example, the computer system **600** may take the form of a desktop computer, a laptop computer, a server, a workstation, a game console, an embedded system.

Furthermore, the computer system **600** may take the form of various other devices including, but not limited to a personal digital assistant (PDA) device, a mobile phone device, a smart phone, a television, and so forth. Additionally, although not shown, the computer system **600** may be coupled to a network (for example, a telecommunications network, a local area network (LAN), a wireless network, a wide area network (WAN) such as the Internet, a peer-to-peer network, a cable network, or the like) for communication purposes through an I/O interface **608.**

It should be understood that the arrangement of components illustrated in the figures described are exemplary and that other arrangement may be possible. It should also be understood that the various system components (and means) defined by the claims, described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components are implemented at least partially as an electronic hardware component, and therefore constitutes a machine, the other components may be implemented in software that when included in an execution environment constitutes a machine, hardware, or a combination of software and hardware.

Although the disclosure and its advantages have been described in detail, it should be understood that various changes, substitutions, and alterations can be made herein without departing from the spirit and scope of the disclosure as defined by the appended claims.

## Claims

1. A method of investigating at runtime a malware embedded in an edge device (204, 304A-C) of a telecommunications network, the method comprising steps of:
detecting cryptomining activity taking place at an edge device during runtime of the edge device, the edge device having been previously infected with malware;
upon detecting the cryptomining activity, replacing a pool server (208, 308) which assigns tasks to the edge device, with a replacement device (206, 306); and
sending and receiving data communications to/from the edge device via the replacement device instead of via the pool server, including sending replacement tasks to the edge device.

2. The method of claim 1, wherein the replacement tasks sent to the edge device are tasks which use a resource level below a predetermined threshold resource level.

3. The method of claim 1, wherein the replacement device sends the pool server acknowledgements.

4. The method of claim 1, wherein the edge device uses resources of the replacement device to carry out the replacement tasks.

5. The method of claim 1, wherein the malware is mining for cryptocurrency.

6. The method of claim 1, wherein the replacement device is a firewall.

7. The method of claim 1, wherein the replacement device is an intrusion prevention/detection system.

8. The method of claim 1, wherein the replacement device is a web application firewall.

9. The method of claim 1, wherein the replacement device is an end point detect and response system.

10. The method of claim 1, wherein the replacement tasks involve dropping a subset of a plurality of job requests sent to the edge device.

11. The method of claim 1, wherein the replacement tasks involve decreasing a difficulty level of a task by removing leading zeros.

12. A system comprising means adapted for carrying out all the steps of the method according to any preceding method claim.

13. A computer program comprising instructions for carrying out all the steps of the method according to any preceding method claim, when said computer program is executed on a computer system.

## Amended claims

### Amended claims in accordance with Rule 137(2) EPC.

1. A method of investigating at runtime a malware embedded in an edge device (204, 304A-C) of a telecommunications network, the method comprising steps of:
detecting cryptomining activity taking place at an edge device during runtime of the edge device, the edge device having been previously infected with malware;
upon detecting the cryptomining activity, replacing a pool server (208, 308) which assigns tasks to the edge device, with a replacement device (206, 306); and
sending and receiving data communications to/from the edge device via the replacement device instead of via the pool server, including sending replacement tasks to the edge device;
wherein replacing the pool server (208, 308) with the replacement device (206, 306) is performed in a manner that ensures that an adversary (202) that exploits the edge device (204) perceives, interacts with, and operates the malware on the edge device (204) as if it is connected to the pool server (208); and
wherein the replacement tasks sent to the edge device are easy-to-calculate tasks to minimize resource consumption of the edge device (204).

2. The method of claim 1, wherein the replacement tasks sent to the edge device are tasks which use a resource level below a predetermined threshold resource level.

3. The method of claim 1, wherein the replacement device sends the pool server acknowledgements.

4. The method of claim 1, wherein the edge device uses resources of the replacement device to carry out the replacement tasks.

5. The method of claim 1, wherein the malware is mining for cryptocurrency.

6. The method of claim 1, wherein the replacement device is a firewall.

7. The method of claim 1, wherein the replacement device is an intrusion prevention/detection system.

8. The method of claim 1, wherein the replacement device is a web application firewall.

9. The method of claim 1, wherein the replacement device is an end point detect and response system.

10. The method of claim 1, wherein the replacement tasks involve dropping a subset of a plurality of job requests sent to the edge device.

11. The method of claim 1, wherein the replacement tasks involve decreasing a difficulty level of a task by removing leading zeros.

12. The method of claim 1, wherein the method is deployed on a device positioned between the pool server and the edge device.

13. A system comprising means adapted for carrying out all the steps of the method according to any preceding method claim.

14. A computer program comprising instructions for carrying out all the steps of the method according to any preceding method claim, when said computer program is executed on a computer system.
